# EUROPEAN PATENT APPLICATION

(11) **EP 3 644 242 A1**
(43) Date of publication of application: **29.04.2020**
(21) Application number: 18201941.4
(22) Date of filing: 23.10.2018
(51) Int. Cl.: G06Q 10/04, G06Q 10/06

(54) **SYSTEM AND METHOD FOR OPTIMIZING A SERVICE STATION LAYOUT**

(71) Applicant: Honda Research Institute Europe GmbH, 63073 Offenbach/Main (DE)
(72) Inventor: RODEMANN, Tobias, 63073 OFFENBACH (DE)
(74) Representative: Beder, Jens

(57) **Abstract**

The method is executed by a system for service station layout optimization, comprising a central computing unit (2) including an initial data input interface (5) and a processor (3) for generating a first station layout or a first set of station layouts based on input initial data. In order to improve the generation of a layout by integrating feedback from a user community or a potential user community, the system further comprises at least one feedback input terminal (7, 11), wherein the feedback input terminal (7, 11) is configured to receive a station layout or a plurality of station layouts from the central computing unit (2), to visualize such received layout(s) and to receive a feedback input. In order to transform the information that is received by the feedback terminal (7, 11) from the user community, the system (1) further comprises a feedback input translation unit (3.3), configured to create from received feedback input additional data. The central computing unit (2) is configured to then execute an optimization algorithm based on the initial data and the additional data.

## Description

The invention regards a system and method that is used for performing optimization of the layout of service stations.

When service stations that provide users with services shall be arranged in a certain area, there is always the problem of how to distribute these service stations. On the one side, there is a need to provide the services in a convenient way for the user. One aspect could be that the user of a charging station for example, has a short traveling distance is to reach the service station so that he can discharge the vehicle's battery to a large extent. On the other side, additional service stations, which obviously could improve the comfort of the user, cause considerable costs for the service provider. For example, an even distribution of stations does not reflect that there might be areas having an increased need for such service stations because of population density whereas in other regions there is almost no demand for a service station, because it is a rural area. Thus, it is a common problem to distribute a limited number of stations over a target area in an optimal way according to different criteria. At the same time also the specific characteristics of a service station need to be optimized, like capacity or price models. Examples for service stations are car sharing stations, logistic hubs, or shops.

A major problem for the optimization is the availability of the relevant data, like customer demand, or specific location information, for example which locations are unsuitable for a service station. It is already known in the art to use automated optimization processes in order to achieve an optimised compromise between the needs of the user and the provider. Often, the layout of service stations is done using methods from the fields of Operations Research and Combinatorial Optimization Problems. Example approaches can be found in CN10750684 A or CN102332122 A, where evolutionary algorithms have been employed. CN107169605 A uses hand-designed heuristics. For large-scale problems with 1000s or more stations, special meta-heuristic approaches have to be used.

All these methods suffer from the same drawback: The methods require a rich set of data about the user demand and local conditions, e.g. roads, living quarters, etc. Of course, parts of this data, like road maps, are easy to acquire while usage data is difficult to come by. This is true especially for new services. Unfortunately, State-of-art optimization methods generally assume that all necessary information is present from the beginning or is provided by an expert in the field. Consequently, an optimization of the layout may only be started after all these data has successfully been collected.

This leads to two completely independent steps when optimizing a service station layout, which is in Operations Research often called "Facility Location Problem". At first, in an isolated and time consuming process, data collection is performed using available databases or user surveys. Then, using all the collected data as an input, the optimization process is executed based on the collected or obtained input data until any kind of stop criterion is reached. This means that user information is collected from potential users that do not have any information about a potential solution. Consequently, all the users who are involved in the survey provide their information completely "blind" and aspects that might immediately apparent for such users from a suggested layout may not be taken account of, because the user forgets about such aspect. An evaluation of the achieved result is done only by a single or a few decision makers who have limited insights into the preferences and situation of users. This produces a substantial danger of providing a solution that is far away from user demand. State of art methods also require a large initial investment in data collection that would delay the installation of the system and result in substantial costs.

Finally, "Human-Guided Simple Search" (David Anderson, Emily Anderson, Neil Lesh , Joe Marks, Brian Mirtich, David Ratajczak, Kathy Ryall; AAAI-00 Proceedings, 2000, AAAI (www.aaai.org)) discloses a cooperative paradigm for solving a vehicle routing problem. It describes that a human expert could suggest modifications to solutions found by the optimizer and then call the optimizer algorithm to refine on this solution. But again, the additional input data after a first optimization loop is input created only by a single person and thus represents his subjective considerations. In particular, such an expert usually is not a user of the system and usefulness of his input depends to a high degree on how good this expert is informed about the specific needs of the average user.

Thus, it is an object of the present invention to improve the process of generating a service station layout.

The object is achieved by the system and method according to the independent claims.

According to the invention, the system for service station layout optimization comprises a central computing unit including an initial data input interface and a processor for generating a first station layout or a first set of station layouts based on input initial data. In order to improve the generation of a final layout by integrating feedback from a user community or a potential user community, the system further comprises at least one feedback input terminal, wherein the feedback input terminal is configured to receive a station layout or a plurality of station layouts from the central computing unit, to visualize such received layout(s) and to receive a feedback input. In order to transform the information that is received by the feedback from the user community into data that can be used in an optimization process, the system further comprises a feedback input translation unit, configured to create from received feedback input such additional data. The central computing unit is configured to then execute an optimization algorithm based on the initial data and the additional data.

Contrary to the state of the art solutions, the invention provides intermediate solutions to a community of users instead of an expert and receives feedback on different aspects of a solution. This is achieved by the connection of feedback input terminals that allow to present intermediate solutions and to input feedback information. The presentation is advantageously a visual representation, like for example a map, where locations of service stations are indicated. The user community, being a group of individuals, all having their personal preferences and opinion regarding the best layout, can then input the feedback into the system. The final optimization is then performed not only taking into account the information which was input as initial information such as map data, but a great number of additional suggestions for example which will improve the optimization such that the final layout solution does much better match the needs of the user community. Since the feedback is given by the user community before the final optimization is run, but after at least a first version of the layout was presented to the user, this leads to an integration of the user into the process of generating the service station layout and the process of service station layout optimization is improved by early integration of current and future customers. The benefits of this approach are that implicit location-specific knowledge can be attained in an easy way, customer preferences can be elucidated and potential customers are attracted to the new product from the beginning.

Advantageous aspects and features are defined in the dependent claims.

According to one advantageous embodiment, the central computing unit is configured to execute an optimization algorithm based on the initial data to generate the first station layout (or the first set of layouts). Using such a standard optimization algorithm even for generating a potential first layout before any user feedback is received, reduces the number of further optimization loops. In comparison to prior art approaches the data that must be input in such a standard optimization algorithm is reduced to a large extent, because of the further optimization process which then takes into consideration the use of feedback and the preparatory work before the optimization process starts is significantly reduced.

Further, it is preferred that the feedback input terminal is configured to transmit received feedback input to the central computing unit and the feedback input translation unit is established in the central computing unit. This results in providing the received input to the central computing unit without any processing on distributed devices. If a plurality of different feedback input terminals are used, it is ensured that the processing for all the received feedback input is done in the same way and using a same database storing the mapping between information and input data. Consequently, integrity of the translation of input feedback into additional data that can then be used in the optimization process is maintained.

According to a preferred embodiment, the central computing unit is configured to collect feedback input until a reiteration criterion is fulfilled. Then, the optimization algorithm is executed based on the collected data and the initial data to generate an optimized station layout or set of optimized station layouts, and to transmit the optimized layout(s) to the feedback input terminal. Collecting data for certain period of time or until a certain amount of data is collected, has the advantage that a new optimization loop is run only in case that the progress in the optimization may be achieved.

Further, it is preferred to repeat the visualization of the optimized layout(s), data collection and optimization until a stop criterion is fulfilled. The feedback that is provided by the users may always be dependent on the presentation of an intermediate layout which is the result of previous optimization loop. Thus, with being presented a plurality of different intermediate layouts that develop towards the optimal solution, the focus of the feedback that is given by the users may shift. Such shift may even cover minor aspects that initially have not been considered by the users, because a user always tends to mention the major drawbacks first. Since the intermediate layouts improve with every optimization run, the users judging the presented latest version of a layout and provide information even on minor details. Thus, a plurality of intermediate results that are suggested to the users may significantly improve the overall result of the optimization of the service station layout with respect to matching the users' needs and preferences.

It may furthermore be advantageous that the amount of data that is collected is adjusted before a new optimization run is started, based on the deviation between optimized station layout(s) of succeeding iterations. Such an adjustment allows an optimization of the computational cost with respect to the achieved improvement. After, for example, the first generated layout is presented to the user, the optimized layout generated in the next optimization run may significantly deviate from the first generated layout, even after only a few users have given their feedback. Specifically, if the user community has rather consistent opinion, it will take then quite a number of additional feedback inputs to achieve a further considerable improvement of the result of the optimization routine.

According to another preferred embodiment, the central computing unit provides, along with the generated intermediate layout(s) information on effects of local changes of the layout(s). Thus, by the central computing unit the impact of small shifts in the location of a specific service station on the overall solution quality is precalculated. Since this information is transferred to the feedback terminal together with the first or intermediate layout(s), it may be presented to the user additionally and thus influence the feedback given by the user. One example is a visual output inform as arrows of different length for different impact values, or as haptic feedback. For example, it might be harder to move stations into directions that are likely to reduce solution quality. In a system where feedback is input by dragging the position of service station by a pointing device, this could be achieved moving back the position to its original position thereby simulating a retracting force. The simulated retracting force is scaled with the magnitude of the effect.

The invention will now be described referring to the annexed drawings in which
- Figure 1: is a schematic of the entire system; and
- Figure 2: is a simplified flowchart illustrating the main method steps of the invention.

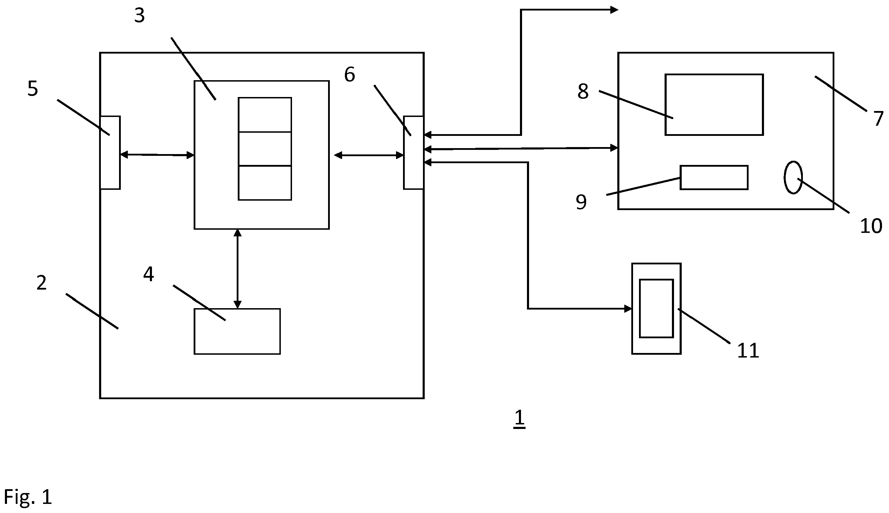

Figure 1 shows a schematic of the entire system for service station layout optimization. The system 1 mainly comprises a central computing unit 2. The central computing unit includes a processor 3 which is connected to a memory 4. The memory 4 stores at least one model for optimizing a service station layout and which is used by the processor 3. Further, input data which is input via an initial data input interface 5 may also be stored in the memory 4. Such data may be obtained from external databases providing for example map data or the like.

As it is indicated in the fig. 1, the processor 3 may be used for executing different processes which are realized as software modules. Thus, in the following it will be referred to a first optimizer 3.1, a second optimizer 3.2 and a translator 3.3. Each of these modules is realized in software which is stored in memory 4 and read in by the processor 3 to be carried out.

The central computing unit 2 further includes a second interface 6. Connected to the second interface unit 6 is at least one feedback input terminal, for example a computer 7 or a mobile device 11 such as a smartphone, laptop computer tablet or the like. By connecting a feedback terminal 7 or 11 to the second interface 6 a feedback channel is established. While in a mobile device such as a smart phone 11 input and output devices are integrated, the respective functions shall shortly be explained with reference to the computer 7. The computer 7 comprises a display 8, a keyboard 9 and a pointing device such as a mouse 10. A user of the computer 7 is able to input information into the computer 7 using the keyboard 9 and the pointing device 10. This enables the user to react on information that is presented on display 8.

As will be described later on in greater detail, a first service station layout that is generated by the first optimizer 3.1 is transmitted via the second interface 6 to the feedback input terminals 7, 11 and maybe further feedback input terminals. There, on their respective displays, like display 8 of the computer 7, the service station layout is visualized. In response to the visualized service station layout, the user may input feedback information to the computer 7, the mobile terminal 11, ... and the input feedback will be transmitted back to the central computing device 2.

When the central computing unit 2 receives the input feedback, this feedback information is processed in the translator 3.3 (feedback translating unit) in order to generate additional data in a way that may serve as input data for the second optimizer 3.2. When, taking into consideration not only the initial input but also the feedback input, a further optimization run is performed using the second optimizer 3.2, the resulting optimized service station layout will be sent to the feedback terminals 7, 11 again as further intermediate layout (assumed that no stop criterion is fulfilled yet). Thus, the next feedback information that is input by some users will be made in reaction to the improved or optimized service station layout. A plurality of repetitions is possible. The number of repetitions will depend on reaching a stop criterion. Repetitions of the second optimization loop can be done either each time feedback information is received from any of the feedback input terminals 7, 11 or only after a certain period of time elapsed or when a defined amount of feedback information was received.

As it is illustrated in figure 1, the system 1 basically uses a first optimization model in the first optimizer 3.1 and an advanced optimization model in the second optimizer 3.2.The advanced optimization model can also integrate dynamic user preferences into the optimization algorithm, which means the additional data that is generated based on the feedback input by users. It is to be noted, that the first optimizer 3.1 and the second optimizer 3.2 do not necessarily have to be different from each other. It is also possible that the first optimizer 3.1 and the second optimizer 3.2 are the same. In that case, the only difference is that the use of feedback is considered only after it was received, obviously. For generating the first layout or set of layouts dummy data may be used, since no additional data is available at that time.

According to one advantageous aspect, the optimizer 3.1 and 3.2 precalculate the effect on quality of a solution for local changes of the layout. This information is added to each layout that is transmitted to the feedback input terminals 7, 11 and output to the user. One simple way to do that is visualizing the effect using arrows that are inserted in the map that represents the first or intermediate layout. In order not to present to much information at the same time, this could be done for only the service station that is currently edited by the user.

Alternatively, a force feedback simulation can be used which might be even more intuitively. When the station is moved to a new position by the user, using a pointing device, and is finally released, the position could be automatically corrected towards its origin. The magnitude of such correction corresponds to the effect a change in position would have on the quality of the layout. The user then would need to make longer movements to achieve a certain position change in a direction that would cause a reduction in quality but only a small movement in a direction that would improve layout quality.

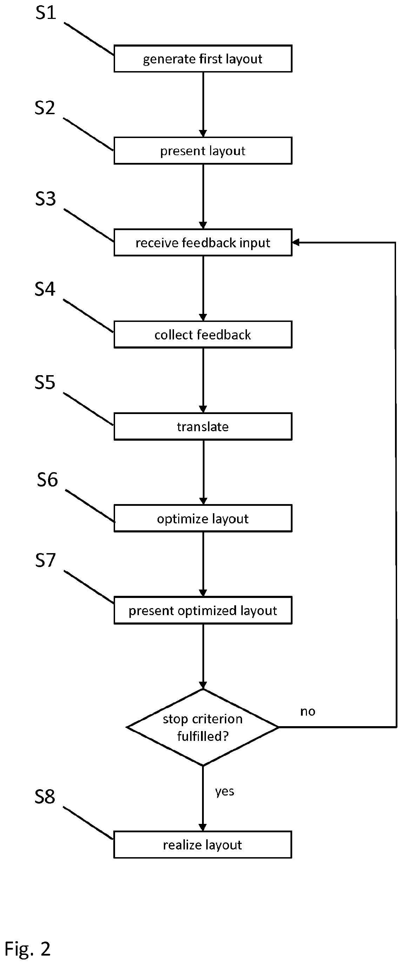

The method steps for optimizing a service station layout will now be explained with reference to the flowchart of figure 2. In a first step S1, a conventional optimization will be run by the first optimizer 3.1 using all initially available information relevant for the optimization task, thereby generating a first service station layout. This information can be in the form of road maps, population statistics, surveys or others and was obtained via the initial data interface 5. Then, in step S2, the first found solution (first station layout/first set of layouts) will be visualized on all connected feedback input terminals 7, 11 and shown to a community of current or potential customers or other interested people (all collectively referred to as users herein). Visualization will be in the form of an area map with indicators of current station positions and may include general information, e.g. number of stations, and/or customer specific information, e.g. the distance to the next stations.

In the next step S3, the users will provide feedback on the current, visualized solution. In one approach this feedback will be collected for some time or until a certain amount of feedback has been received (reiteration criterion). In another approach the community is engaging in a fast direct interaction, so that the system loop is running with very short delays (online optimization process).

Possible feedback channels are social media in the form of like / dislike for a small number of alternative solutions. This small number of alternative solutions which is displayed is the set of station layouts that is generated. If only like / dislike feedback shall be used as feedback information, then for each optimization loop it is necessary to compute a set of layouts that are to be represented on the feedback input terminals 7, 11.

Alternatively, the feedback channels uses interactive web-pages where users can directly change the station layout using a pointing device like mouse 10, touchscreen or similar device, emails with (machine-readable) feedback, or even computer games for the online optimization process. In the latter case, only one layout per optimization loop needs to be output to the feedback input terminals 7, 11. Generally, the description of the invention refers to using a single layout for visualizing a solution, but it is evident, that all aspects are valid in the very same way also for presenting a set of layouts.

In order to enable the translator 3.3 to translate the input feedback information from the users into formal information that can be processed by the second optimizer 3.2, it is preferred to limit possible feedback that is input by users. Examples for such limited feedback options are:
- User suggests addition of a new station at a certain location
- User suggests to delete a specific station
- User recommends to move a station to a different location
- User comments on quality of a station or location (e.g. dirty, dangerous area, nice shopping opportunities)
- User indicates which station(s) he / she wants to use.
- User comments on general structure of solutions, e.g. too few stations, too far spread, difficult to reach
- Overall satisfaction with the solution
- User provides on his/her general preferences relative to the presented solution (e.g. only willing to walk 200 m, but next station is 300 m away).

After feedback information has been collected and aggregated in step S4 it is translated in step S5 into data that is usable by the second optimizer 3.2. This might come as additional customer data, different fitness functions, constraints, preferences, fixed solutions, or taboo areas. With the additional data, the second optimizer 3.2 is then run in step S6 to provide new solutions. If, after running the second optimizer 3.2, the stop criterion is not yet fulfilled, the new, optimized service station layout (or set of layouts) is output instead of the first station layout by the feedback input terminals 7, 11 as an intermediate layout and steps S3 to S7 are repeated. Examples for a stop criterion are reaching convergence which means that no more changes are requested and all users are satisfied, or exhaustion of time and/or resources.

After the stop criterion is reached, the final layout will be realized in step S8.

To improve understanding of the present invention, a short and simple example shall be explained below. From the specific example, it becomes also clear, that the initial first service station layout does not necessarily have to be a solution output by a first optimizer 3.1. It is also possible to start from a simple, manually generated distribution of service stations as layout, which is the starting point chosen in the following example:
a) A fixed number of service stations is evenly distributed over a target area
b) The distribution of stations is shown to a user group on an interactive webpage
c) As long as the number of stations is below a certain limit, stations can be deleted and added. Once above the limit, stations can only be deleted or moved. Stations identified as relevant by the optimizer or selected by many other users cannot be deleted. This is a form of user guidance.
d) Now, each user provides his feedback by submitting his or her requested modifications and an overall satisfaction level. Within some limits defined by the system, every station can be deleted or moved and new stations can be selected. When a station is moved, information on effects of such movement is output to the user.
e) Then, the translator 3.3 generates additional input data by converting the received user feedback into a proper format for the advanced, second optimizer 3.2. Examples for such translation of feedback input are:
   aa) Stations that are deleted by a user are removed from the solution, and the specific station will not be considered again by the advanced, second optimizer 3.2
   bb) Stations added by users are integrated by the advanced optimizer into new solutions and the deletion of these stations will be penalized.
   cc) For stations that are moved the new positions will be fixed and any further changes by the advanced optimizer will be penalized. In case a station was moved by several users the geometric center of all positions will be selected.
   Of course, whether a station is "deleted", "added" or "moved" must be decided after the feedback information is collected based on the input of a plurality of users. For example, it could be considered that a station is only deemed to be "deleted" if a majority of the users who provided input deleted this particular station.
f) If user satisfaction is high enough or stagnating or the budget is exhausted the process will be stopped, otherwise the advanced optimizer will integrate the translated user feedback and provide a new solution and the system will continue from step 2.

Setting up a network of service stations is a common task in many areas. The following is an exemplary but incomplete list of potential application areas:
- Distribution of charging stations for electric vehicles. An operator of a larger number of electric vehicle charging stations wants to distribute the charging stations close to potential customers but also needs to consider that during charging people prefer to have some options to spend their time (e.g. shopping, café, sports). In addition to the position also the number of charging points, and the maximum charging power could be a target of optimization.
- Battery swapping stations. Similar to charging stations, battery swapping stations need to be distributed in an optimal manner, but criteria are likely to be different. Swapping is a faster process and easy access might be the prime objective. In addition to customers, also representatives of the local grid operator might want to comment on the current solution to ensure a proper availability of power.
- Car sharing stations. Again there are many similarities to charging station optimization, but for car sharing also the availability of certain types of cars (e.g. family car or convertible) might be subject to optimization.
- Mailboxes or pick-up stations for delivery services. Here easy access by a multitude of mobility options is essential so that every customer can access the station.
- Logistic centers for delivery or spare parts. It would be necessary to not only visualize the position of the logistic centers but also the resulting supply level (cost, latency, availability).

## Claims

1. System for service station layout optimization comprising:
a central computing unit (2) including an initial data input interface (5), a processor (3) for generating a first station layout or a first set of station layouts based on input initial data,
**characterized in that**
the system (1) further comprises:
at least one feedback input terminal (7, 11), wherein the feedback input terminal (7, 11) is configured to receive a station layout or a plurality of station layouts from the central computing unit (2) and to visualize such received layout(s), and to receive a feedback input,
a feedback input translation unit (3.3), configured to create from received feedback input additional data,
wherein the central computing unit (2) is configured to execute an optimization algorithm based on the initial data and the additional data.

2. System according to claim 1,
**characterized in that**
the central computing unit (2) is configured to execute an optimization algorithm (3.1) based on the initial data to generate the first station layout or the first set of layouts.

3. System according to claim 1 or 2,
**characterized in that**
the feedback input terminal (7, 11) is configured to transmit received feedback in put to the central computing unit (2) and feedback input translation unit is established in the central computing unit (2).

4. System according to any one of claims 1 to 3,
**characterized in that**
the central computing unit (2) is configured to collect feedback input until a reiteration criterion is fulfilled and to execute then the optimization algorithm based on the collected data and the initial data to generate an optimized station layout or set of optimized station layouts, and to transmit the optimized layout(s) to the feedback input terminal (7, 11).

5. System according to claim 4,
**characterized in that**
visualization of the optimized layout(s), data collection and optimization are repeated until a stop criterion is fulfilled.

6. System according to claim 5,
**characterized in that**
the amount of data that is collected is adjusted based on the amount of difference between optimized station layout(s) of succeeding iterations.

7. System according to any one of claims 1 to 6,
**characterized in that**
the central computing unit (2) provides, along with the generated layout(s), information on effects of local changes of the layout(s).

8. Method for generating service station layout comprising the following method steps:
receiving via an interface of a central computing unit initial data,
generating by a processor a first station layout or a first set of station layouts based on the input initial data (S1),
**characterized by** the following further method steps:
at least one feedback input terminal receives a station layout or a plurality of station layouts from the central computing unit and visualizes such received layout(s) (S2),
the feedback input terminal receives a feedback input (S3),
create, by a feedback input translation unit, additional data from received feedback (S5), and
execute by the central computing unit (2) an optimization algorithm based on the initial data and the additional data to generate at least one optimized station layout (S6).

9. Method according to claim 8,
**characterized by**
executing an optimization algorithm based on the initial data to generate the first station layout or the first set of layouts.

10. Method according to claim 8 or 9,
**characterized by**
transmitting received feedback input to the central computing unit and performing feedback input translation by the central computing unit (2).

11. Method according to any one of claims 8 to 11,
**characterized by**
collecting feedback input until a reiteration criterion is fulfilled (S4) and
executing then the optimization algorithm based on the collected data and the initial data to generate an optimized station layout or set of optimized station layouts, and
transmitting the optimized layout(s) to the feedback input terminal.

12. Method according to claim 11
**characterized by**
visualizing the optimized layout(s), collecting data and optimizing the layout is repeated until a stop criterion is fulfilled.

13. Method according to claim 12
**characterized by**
adjusting the amount of data that is collected based on the amount of difference between optimized station layout(s) of succeeding iterations.

14. Method according to any one of claims 8 to 13,
**characterized by**
providing, the central computing unit (2) and along with the generated layout(s), information on effects of local changes of the layout(s).
